# EUROPÄISCHE PATENTSCHRIFT

(11) **EP 1 984 632 B1**
(45) Veröffentlichungstag und Bekanntmachung des Hinweises auf die Patenterteilung: **18.05.2011**
(21) Anmeldenummer: 07703236.5
(22) Anmeldetag: 02.02.2007
(51) Int. Cl.: F16B 13/02, F16B 13/12

(54) **SPREIZDÜBEL**
SPREADING PLUG
CHEVILLE EXPANSIBLE

(30) Priorität: 04.02.2006 DE 102006005091
(43) Veröffentlichungstag der Anmeldung: 29.10.2008
(73) Patentinhaber: Tox-Dübel-Werk R.W. Heckhausen GmbH & Co. KG, 78351 Bodmann-Ludwigshafen (DE)
(72) Erfinder: BURGER, Klaus, 88662 Überlingen-Nussdorf (DE); SCHMID, Dieter, 78333 Stockach (DE); KAROTSCH, Bernd, 78351 Bodman-Ludwigshafen (DE); JOHNEN, Uwe, 78224 Singen (DE)
(74) Vertreter: Feldkamp, Rainer
(86) Internationale Anmeldenummer: PCT/EP2007/000917
(87) Internationale Veröffentlichungsnummer: WO 2007/088065

(56) Entgegenhaltungen:
- DE-A1- 1 575 296
- DE-A1- 10 011 565
- DE-A1- 19 607 446
- US-A- 3 516 324

## Beschreibung

Die Erfindung bezieht sich auf einen Spreizdübel mit einem Dübelmantel, der einen Dübelhals, einen Dübelschaft, einen Dübelfuß und ein durchgehendes Spreizmitteleinsatzloch aufweist, entsprechend der Merkmale aus dem oberbegriff des Anspruchs 1 (US 3516324A).

Derartige Spreizdübel sind in den verschiedensten Ausführungen bekannt. Üblicherweise ist dabei der Dübelmantel mit drei im gleichen Winkelabstand angeordneten Längsschlitzen versehen, die drei Spreizelemente bilden, die sich beim Eindrehen einer Schraube nach außen gegen die Bohrlochwandung spreizen. Auf diese Weise lässt sich bei sauber gebohrten zylindrischen Bohrlöchern, beispielsweise in Beton, eine zuverlässige Verankerung des Dübels erreichen. In porösem Mauerwerk oder in Hohlkammersteinen oder zu groß dimensionierten Bohrlöchern ist häufig der Ausziehwiderstand unzureichend. Um in Hohlkammersteinen einen Halt zu erreichen, sind auch als Knickdübel ausgebildete Spreizdübel bekannt, bei denen sich die Schraube im Dübelfuß ein Gewinde einschneidet und der Dübel axial gestaucht wird, wodurch die Mantelsegmente, die keinen Widerstand im Bohrloch finden, hinter der Lochwand verknotet werden.

Aus der DE 75 10 134 U ist ein Spreizdübel bekannt, der einen zylindrischen Dübelmantel aufweist, dessen Dübelfuß eine Anfasung aufweist, und von dessen rückwärtigem Ende ein nach vom verjüngter Hohlraum ausgeht. Der Dübelmantel weist zwei Querschlitze auf, von denen der erste vom Dübelhals ausgeht und der zweite rückwärtig dazu um 90° versetzt ist. Der zweite Querschlitz wird am rückwärtigen Dübelende im Bereich des Dübelfußes durch am Umfang angeformte kurze Vorsprünge geschlossen. Der erste Querschlitz erstreckt sich bis maximal 2/3 der Dübellänge vom vorderen Dübelende her. Der dazu um 90° versetzte rückwärtige Querschlitz erstreckt sich ebenfalls bis zu 2/3 der Dübellänge. Am rückwärtigen Ende des Dübels mündet die Aufnahmebohrung für ein Spreizelement, wobei sich die Bohrung nach vorn verjüngt und insgesamt bis zu zwei Drittel der gesamten Dübellänge nach vom reicht. Der darin beschriebene Dübel besteht aus verformbarem Material, vorzugsweise aus nachgiebigem Kunststoff. Aufgrund der durchgehend zylindrischen Form des Dübelmantels kann sich dieser beim Aufspreizen nur schlecht an Unregelmäßigkeiten in der Form des Bohrloches entlang dessen Länge anpassen, wie sie beispielsweise in Hohllochziegeln zwangsläufig gegeben sind.

Aus der DE 93 12 057 U1 ist ein Kunststoffdübel, vorzugsweise für Hohllochziegel, bekannt, der eine Längsbohrung und wenigstens zwei nacheinander angeordnete, jeweils durch Querschlitze voneinander getrennte Spreizteile aufweist. Der erste Spreizteil wird durch ein hülsenfömiges Kopf- und Schaftteil begrenzt Der zweite Spreizteil wird durch das Schaft- und Fußteil begrenzt. Das Kopf- und Schaftteil weist eine dem Außendurchmesser der Befestigungsschraube entsprechende Längsbohrung auf. Die Längsbohrung im Fußteil ist mit einem dem Gewinde der Befestigungsschraube angepassten Innengewinde versehen. Die beiden Spreizteile sind um 90° zueinander versetzt. Auf diese Weise liegen die aufgespreizten Schenkel kreuzförmig übereinander. Beim Festziehen der Befestigungsschraube werden die sich in Hohlräumen des Hohllochziegels befindenden Schenkel beider Spreizteile radial nach außen geknickt und bilden eine Verdickung in diesen Hohlräumen. Hierzu ist es erforderlich, dass die Hohlräume in Richtung der Dübelbohrung eine Abmessung aufweisen, die in etwa der Länge der Querschlitze entspricht.

Aus der DE 198 49 821 A1 ist ein Spreizdübel aus Kunststoff mit einem durch Eindrehen einer Befestigungsschraube verankerbaren Spreizteil bekannt. Der Dübel ist mit einer Längsbohrung versehen, die am Dübelhals durch einen zylindrischen Abschnitt gebildet ist, der sich zum Dübelfuß hin in mehreren Stufen konisch verjüngt. Der Dübel weist einen ersten Spreizteil auf, der sich unmittelbar an den zylindrischen Teil der Bohrung anschließt und durch einen längsschlitz gebildet wird, der den Spreizteil in zwei Schenkel teilt. An diesen Spreizteil schließt sich ein zweiter Spreizteil an. Der Längsschlitz des zweiten Spreizteils ist um 90° gegenüber dem Längsschlitz des ersten Spreizteils versetzt. Die Längsschlitze der beiden Spreizteile können sich überlappen. Beide Spreizteile weisen an ihrer Außenoberfläche sägezahnförmige Kerben auf. Dadurch entsteht eine griffige Außenoberfläche, die ein Eindringen der durch die Kerben gebildeten Zähne in die Bohrlochwandung ermöglicht.

Der Erfindung liegt die Aufgabe zugrunde, einen universell für die verschiedensten Anwendungszwecke geeigneten Spreizdübel zu schaffen, der verbesserte Haltewerte aufweist und sich möglichst schonend dem Baustoff anpasst.

Gelöst wird die gestellte Aufgabe durch die im Patentanspruch 1 angegebenen Merkmale. Durch die in Umfangsrichtung und in Achsrichtung versetzte Anordnung der Schlitze werden über die Länge des Dübelmantels unterschiedliche Hauptspreizrichtungen geschaffen, wodurch auch in ungünstig verlaufenden Bohrlöchern eine ausgezeichnete Verankerung erreicht wird. Während bei den bisher bekannten Spreizdübeln die Spreizwirkung auf einen relativ großen axialen Bereich der Dübellänge beschränkt war, werden nach der Erfindung zwei oder mehrere axial beabstandete oder überlappende Bereiche mit unterschiedlichen Hauptspreizrichtungen gebildet, die ihrerseits durch Ringnuten in einzelne, axial aufeinanderfolgende Spreizabschnitte unterteilt sind, wodurch eine genauere und federnde Anpassung an das Bohloch ermöglicht wird. Über die Länge des Dübels können mehrere derartige Bereiche angeordnet werden, jedoch ist es im Allgemeinen zweckmäßig und ausreichend, zwei derartige Bereiche mit jeweils über den Durchmesser verlaufenden Schlitzen vorzusehen, so dass zwei Hauptspreizrichtungen gebildet werden, die im Winkel von 90° gegeneinander angestellt sind. Durch eine derartige paarweise Anordnung von Schlitzen wird erreicht, dass bei einer Spreizung die Dübelhülse gleichmäßig, aber in der Tiefe versetzt, in vier Richtungen gespreizt wird. Die so gebildeten Schlitzpaare sind zweckmäßigerweise überlappt angeordnet, d. h. die Schlitze des einen Paares greifen in jenen Bereich des Mantels ein, der von dem anderen Schlitzpaar durchsetzt ist. Durch diese Überlappung der Schlitze, etwa in der Mitte des Schaftes, entsteht an dieser Stelle außerdem eine parallele Spreizung, welche gewährleistet, dass die Dübelhülse in diesem Bereich absolut gleichmäßig die Spreizkraft an den Verankerungsgrund abgibt. Diese Anordnung ist auch von besonderem Vorteil dann, wenn der Verankerungsgrund beim Eindrehen der Schraube einen Riss erhalten hat. Derart erzeugte Risse laufen dann immer zum Bohrloch hin.

Um ein Mitdrehen des nur lose in ein Bohrloch eingesetzten Dübels beim Eindrehen der Spreizschraube zu verhindern, ist es bekannt, auf dem Außenmantel fest angeordnete Längsrippen vorzusehen, die sich in die Bohrlochwandung eingraben, was insbesondere dann ungünstig ist, wenn das das Bohrloch umgebende Material relativ weich ist.

Gemäß einer bevorzugten Ausgestaltung des Dübels ist daher vorgesehen, dass der Dübelmantel Fensterschlitze aufweist, in denen Drehflügel radial beweglich angeordnet sind, die an ihrem dübelfußseitigen Ende über Drehgelenke am Dübelmantel angeformt sind. Hierdurch ergibt sich eine besonders günstige Verankerung des Dübels im Bohrloch, weil sich die Drehflügel beim Einsetzen des Dübels in das Bohrloch nach innen verschieben und erst beim Einsetzen des Spreizelementes nach außen getrieben werden und dann die Drehsicherungsfunktion gewährleisten.

Durch die erfindungsgemäße Ausbildung des Dübels wird auch bei einer längeren Ausgestaltung gewährleistet, dass das Spreizglied axial in dem Einsatzloch geführt wird, ohne seitlich auszuwandern.

Weitere vorteihafte Ausgestaltungen der Erfindung ergeben sich aus den Unteransprüchen.

Nachstehend werden Ausführungsbeispiele der Erfindung anhand der Zeichnung beschrieben. In der Zeichnung zeigen:

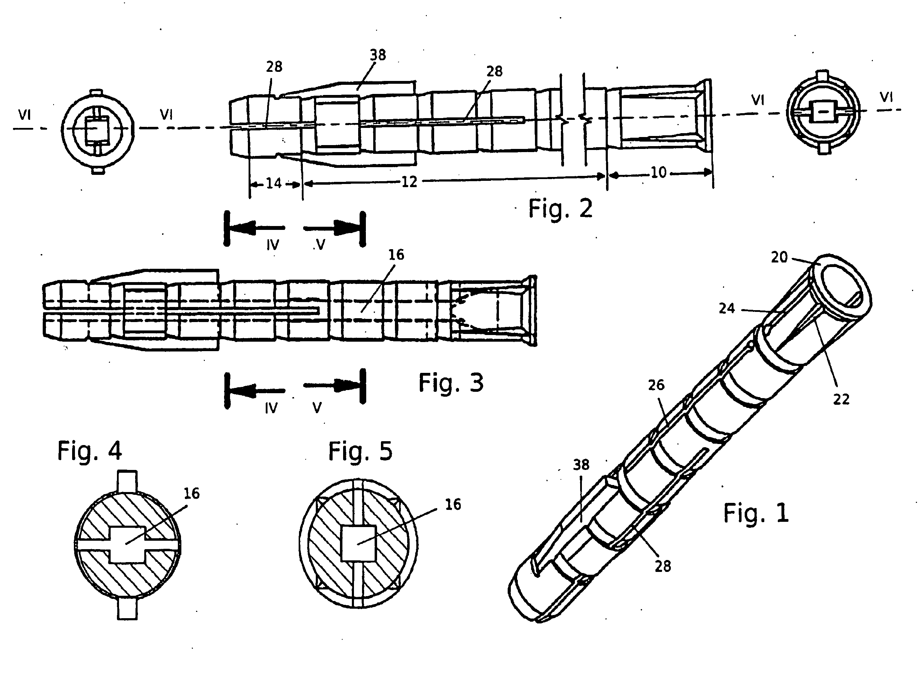

- Fig. 1: eine perspektivische Darstellung eines erfindungsgemäßen Spreizdübels;
- Fig. 2: eine Seitenansicht des Spreizdübels nach Fig. 1, zusammen mit axialen Ansichten auf Dübelhals und Dübelfuß;
- Fig. 3: eine der Fig. 2 entsprechende Seitenansicht mit strichliert angedeutetem Einsatzloch;
- Fig. 4: in größerem Maßstab einen Schnitt nach der Linie IV-IV gemäß Fig. 3;
- Fig. 5: in größerem Maßstab einen Schnitt nach der Linie V-V gemäß Fig. 3;

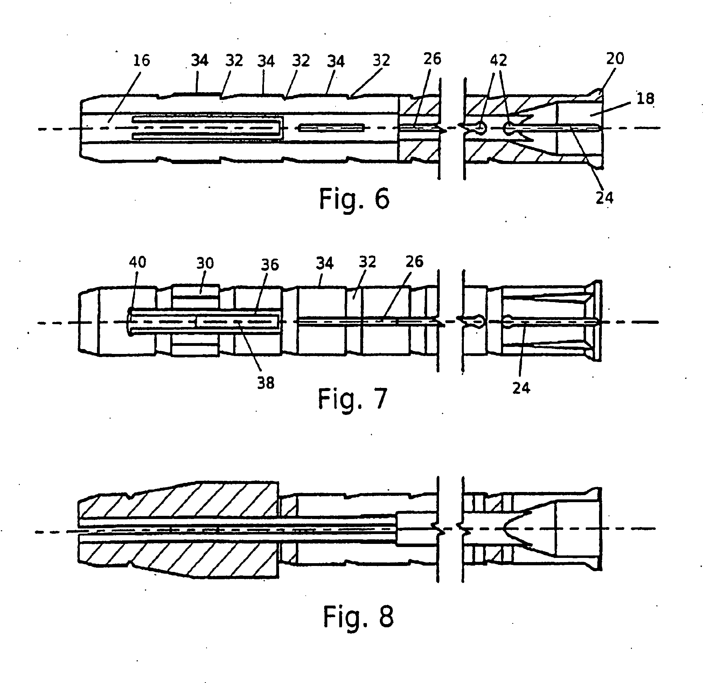

- Fig. 6: einen Längsschnitt des Spreizdübels, geschnitten längs der Linie VI-VI gemäß Fig. 2:
- Fig. 7: eine gegenüber Fig. 2 um 90° um die Dübelachse verdrehte Ansicht des Spreizdübels;
- Fig. 8: einen Vertikalschnitt des Dübels gemäß Fig. 7;
- Fig. 9: eine Ansicht des Dübels mit eingedrehter Schraube im aufgespreizten Zustand;
- Fig. 10: den Dübel gemäß Fig. 9 um 90° um die Dübelachse verdreht;
- Fig. 11: den Dübel gemäß Fig. 9 und 10 in einem Leichthochlochziegel.

Der erfindungsgemäße Spreizdübel, der vorzugsweise aus Kunststoff hergestellt ist, weist einen Dübelhals 10, einen Dübelschaft 12 und einen Dübelfuß 14 auf. Über die gesamte Länge des Dübels erstreckt sich ein Einsatzloch 16, das über den Schaftbereich und den Dübelfuß einen gleichen, im Ausführungsbeispiel quadratischen, Querschnitt besitzt und im Dübelhals in eine Erweiterung 18 übergeht, die eine spreizdruckfreie Zone bildet. Der Dübelhals weist einen geschlossenen Setztiefenanschlag 20 und mehrere im gleichen Winkelabstand auf der Außenseite angeordnete Axialrippen als Drehsperre auf, deren Höhe nach dem Schaft abnimmt. Um zu vermeiden, dass die Rippen beim Eintreiben des Dübelhalses in das Bohrloch abgeschert werden und dadurch ihre Drehsicherung verlorengeht, ist im Dübelhals ein über den Durchmesser verlaufender Axialschlitz 24 vorgesehen, der im Setztiefenanschlag endet und ein Zusammenquetschen des Dübelhalses beim Einsetzen bewirkt, so dass die Funktion der Drehsperre erhalten bleibt.

Der Dübelschaft 12 weist zwei um 180° versetzte erste Längsschlitze 26 auf, die im Abstand zu den Schlitzen 24 beginnen und im Schaft 12 enden. Um 90° versetzt zu diesen ersten Längsschlitzen 26 weist der Dübelmantel im Schaft 12 zwei weitere diametral gegenüberliegende zweite Längsschlitze 28 auf, die den Dübelfuß 14 durchlaufen und diesen in zwei Spreizsegmente aufteilen. Hierdurch wird eine Spreizfunktion über die gesamte Dübellänge erzielt. Überbrückt werden die zweiten Schlitze 28 im Übergangsbereich zwischen Schaft und Fuß durch Brückenelemente 30, die eine vorzeitige Spreizung verhindern. Gemäß dem dargestellten Ausführungsbeispiel überlappen sich die Längsschlitze 26 und 28 um ein gewisses Stück in dem dem Dübelfuß zugewandten Endabschnitt des Schaftes.

Im Schaftabschnitt und im Dübelfußabschnitt ist der Dübelmantel mit Ringnuten 32 dreieckigen Querschnitts versehen, wodurch ringförmige, die Spreizenergie verteilende Spreizabschnitte 34 gebildet werden.

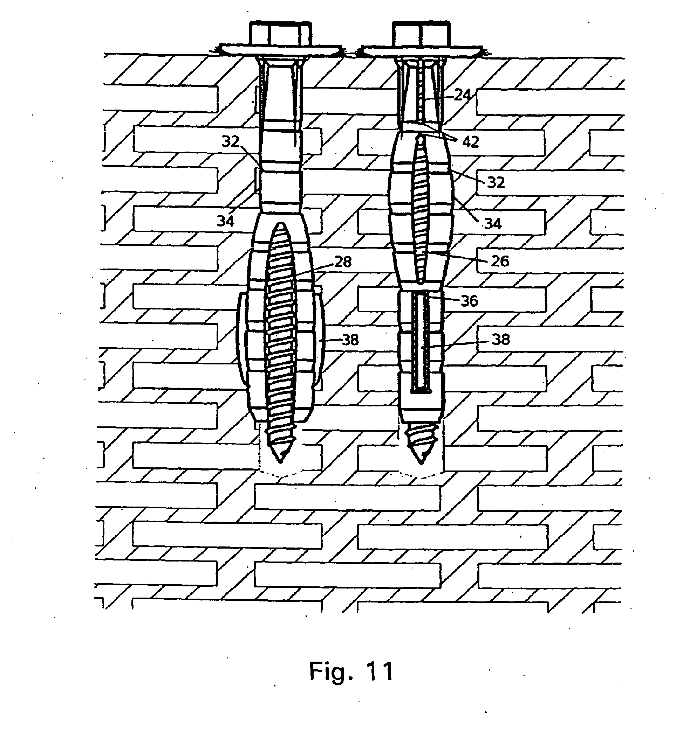

Auf diese Weise ist der Dübel insbesondere für die Verwendung in Leichthochlochziegeln geeignet, wie dies in Fig. 11 gezeigt ist, da die Innenstege dieser Ziegel im Vergleich zu Innenwandziegeln relativ dünn sind. Leichthochlochziegel werden als Wärmedämmziegel in Außenwänden verwendet und zeichnen sich durch eine niedrige Rohdichte und ein besonderes Lochbild aus. Die Innenstege dieser Ziegel weisen eine Wandungsstärke von 3 bis 6 mm auf. Die Hohlkammern sind relativ klein, die Höhe der Kammern liegt bei 5 bis 15 mm längs zur Dübelachse. Die Rohdichte solcher Ziegel ist kleiner als 1,0 kg/dm³.

Durch die Verteilung der Spreizenergie auf die Spreizabschnitte 34 werden diese Innenstege besonders geschont. Die kontinuierliche Anpassung der Spreizabschnitte 34 des Dübels an den Baustoff ist auch aus Fig. 11 ersichtlich. Die Dübelhülse liegt an vielen einzelnen Innenstegen an. Das Tragverhalten entspricht in etwa einem elastisch gebetteten Balken. Die einzelnen Spreizabschnitte 34 passen sich dem Ziegel an. Wenn sich ein Spreizabschnitt in einem Hohlraum befindet, verhalten sich die Ringnuten 32 zusätzlich wie Widerhaken. Über die vielen Innenstege leistet der Dübel dem Herausziehen außerdem über Reibschluss Widerstand.

In Richtung der ersten Längsschlitze 26 schließen dübelfußseitig mit Abstand verbreiterte Fensterschlitze 36 an, die sich bis in den Dübelfuß hinein erstrecken. Am dübelfußseitigen Ende dieser Fensterschlitze sind Drehflügel 38 im Dübelfuß 14 über Drehgelenke 40 angeformt. Diese Drehflügel sind in den Fensterschlitzen 36 frei beweglich und bilden nach außen gespreizt eine Drehflügelsperre.

Die Oberfläche des Dübelmantels bietet ein Höchstmaß an Reibfläche als Widerstand gegen ein Herausziehen. Gleichzeitig bewirkt die Profilierung, dass sich der Dübelmantel optimal an Unebenheiten durch die gegeneinander beweglichen Spreizsegmente anpassen kann.

Um an den Enden der Schlitze Kerbwirkungen im Kunststoff zu vermeiden, wurden an den markanten Schlitzenden Abrundungen 42 vorgesehen, wodurch Spannungsspitzen aufgrund der Spreiz- und Verformungswirkungen abgebaut werden können.

Die am Dübelfuß seitlich schwenkbar angeordneten Drehflügel 38 können beim Einführen des Dübels in das Bohrloch in das Einsatzloch 16 durch die Fensterschlitze 36 nach innen einklappen. Beim Eindrehen des Spreizelementes in das Einsatzloch werden die Drehflügel nach außen an die Bohrlochwandung gedrückt und verhindern ein Mitdrehen des Dübels. Die Drehflügelsperren können mit ihren widerhakenförmigen Enden vorhandene Bohrlochvorsprünge hintergreifen und so auch bei Hohlkammersteinen zusätzlichen Halt erzeugen. Dadurch erfolgt eine optimale Anpassung an den Baustoff. Das den Spreizkanal bildende Einsatzloch 16 ist derart optimiert, dass die verschiedensten Spreizelemente, wie Spanplattenschrauben und Holzschrauben, derart eingedreht werden können, dass eine günstige Spreizwirkung entsteht. Gleichzeitig steigt das Drehmoment, welches für das Eindrehen der Schraube erforderlich ist, nicht derart an, dass dadurch eine Torsionsüberbeanspruchung der Schraube auftritt. Anstelle von Schrauben können die Spreizelemente auch durch Einschlagelemente, wie Nägel, aufgespreizt im Bohrloch festgelegt werden.

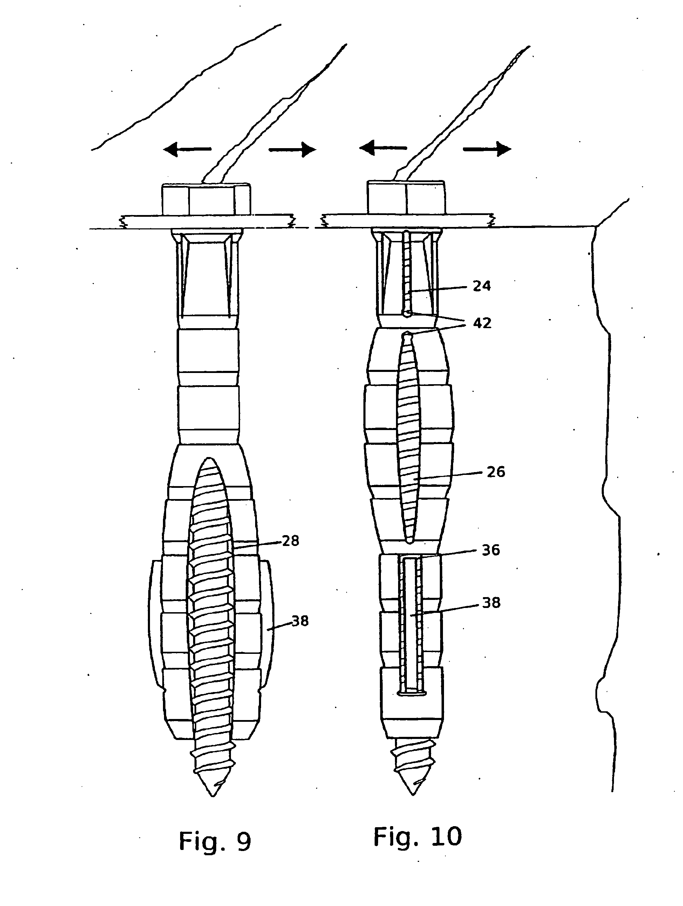

Durch die im Umfang versetzte Anordnung der überlappenden Spreizschlitze 26 und 28 wird, wie aus den Fig. 9 und 10 ersichtlich, eine Aufspreizung in mehreren umfangsmäßig versetzten Richtungen bewirkt. Die um 90° zueinander versetzten Spreizteile werden beim Eindrehen des Spreizelementes in zwei um 90° zueinander versetzten Hauptspreizrichtungen beansprucht. Die Elemente sind derart angeordnet, dass die auftretende Energie, die den Widerstand gegen ein Herausziehen der Dübelhülse leistet, rings um den Dübel herum die Kraftwirkung verteilt, d.h. die Spreizkraft wird schonend in allen Richtungen gleichmäßig in den Verankerungsgrund übertragen. Bei dem dargestellten Ausführungsbeispiel sind zwei um jeweils 90° in Umfangsrichtung versetzte axial überlappende Spreizschlitzpaare 26, 28 vorgesehen. Es soll jedoch für die Erfindung auch vorbehalten bleiben, aus drei oder mehreren bestehende versetzte Schlitzgruppen, beispielsweise jeweils drei erste Schlitze, im Winkelabstand von 120° anzuordnen und im Winkel von 60° gegenüber zweiten Einzelschlitzen zu versetzen. Gemäß dem Ausführungsbeispiel verlaufen die Schlitze in Achsrichtung. Für die Erfindung soll es jedoch vorbehalten bleiben, die Schlitze in entsprechender Versetzung schräg oder schraubenlinienförmig verlaufend anzuordnen, wodurch sich eine weitere Optimierung beim Eindrehen und Spreizen ergeben kann.

Nach dem Ausführungsbeispiel sind die Drehflügel gelenkig im Dübelfuß angeordnet. Es ist jedoch auch denkbar, diese weiter in den Schaftbereich hinein zu verlegen. Wichtig dabei ist, dass sich diese Drehflügel innerhalb ihrer Fenster nach innen in den Einsatzkanal einschwenken können, um dann beim Eindrehen der Schraube nach außen gegen die Bohrlochwandung gedrückt zu werden.

So können im Rahmen der vorliegenden Erfindung noch weitere Abwandlungen, Modifikationen oder Konstruktionsänderungen bewirkt werden, ohne den Rahmen der Erfindung zu verlassen.

## Patentansprüche

1. Spreizdübel, vorzugsweise aus Kunststoff, mit einem Dübelhals (10), einem Dübelschaft (12), einem Dübelfuß (14) und einem durchgehenden Spreizmitteleinsatzloch (16), wobei wenigstens im Bereich des Schaftes (12) erste in Umfangsrichtung versetzte Schlitze (26) angeordnet sind, die Spreizsegmente bilden, die beim Einsetzen eines Spreizelementes gegen eine Bohrlochwandung spreizbar sind, wobei im Dübelmantel zweite Schlitze (28) vorgesehen sind, die in Umfangsrichtung zueinander und zu den ersten Schlitzen (26) und axial gegeneinander gegenüber den zweiten Schlitzen (28) versetzt sind, wobei die ersten und zweiten Schlitze (26, 28) in Längsrichtung überlappt zueinander angeordnet sind wobei die zweiten Längsschlitze (28) den Dübelfuß (14) durchlaufen und diesen in zwei Spreizsegmente aufteilen, und wobei die zweiten Schlitze im Übergangsbereich zwischen Dübelschaft (12) und Dübelfuß (14) durch Brückenelemente (13) überbrückt sind, die eine vorzeitige Spreizung verhindern, **dadurch gekennzeichnet dass** das Spreizmitteleinsatzloch über den Schaftbereich und den Dübelfuß (14) einen gleichen Querschnitt aufweist und dass wenigstens der Schaftbereich durch Ringnuten (32) in einzelne, axial aufeinanderfolgende, ringförmige, die Spreizenergie verteilende Spreizabschnitte (34) unterteilt ist.

2. Spreizdübel nach Anspruch 1, **dadurch gekennzeichnet, dass** die ersten und/oder die zweiten Schlitze (26, 28) paarweise um 90° versetzt zueinander angeordnet sind.

3. Spreizdübel nach Anspruch 1 oder 2, **dadurch gekennzeichnet, dass** alle Schlitze (26, 28) achsparallel verlaufen.

4. Spreizdübel nach Anspruch 1 oder 2, **dadurch gekennzeichnet, dass** die ersten und/oder die zweiten Schlitze (26, 28) schräg zur Längsachse verlaufen.

5. Spreizdübel nach den Ansprüchen 1 oder 2, **dadurch gekennzeichnet, dass** die ersten und/oder die zweiten Schlitze schraubenförmig zur Längsachse verlaufen.

6. Spreizdübel nach einem der vorhergehenden Ansprüche, **dadurch gekennzeichnet, dass** der Dübelmantel Fensterschlitze (36) aufweist, in denen Drehflügel (38) radial beweglich angeordnet sind, die an ihrem Dübelfuß-seitigen Ende über Drehgelenke (40) am Dübelmantel angeformt sind.

7. Spreizdübel nach Anspruch 6, **dadurch gekennzeichnet, dass** die Fensterschlitze (26) mit den Drehflügeln (38) im Dübelfußbereich im gleichen Winkelabstand zueinander angeordnet sind.

8. Spreizdübel nach einem der vorhergehenden Ansprüche, **dadurch gekennzeichnet, dass** der Einsatzkanal (16) im Dübelhals eine Erweiterung (18) zur Bildung eines spreizdruckfreien Bereiches aufweist.

9. Spreizdübel nach einem der Ansprüche 1 bis 8, **dadurch gekennzeichnet, dass** die Schlitzenden zur Vermeidung einer Kerbwirkung Abrundungen aufweisen.

10. Spreizdübel nach einem der Ansprüche 1 bis 9, **dadurch gekennzeichnet, dass** im Halsbereich Drehsicherungsrippen (22) und wenigstens ein Axialschlitz (24) vorgesehen sind.

11. Spreizdübel nach Anspruch 10, **dadurch gekennzeichnet, dass** die Axialschlitze im Halsteil in einem durchgehenden Setztiefenanschlag (20) enden.

## Claims

1. Expansion plug, preferably made from plastic, with a plug neck (10), a plug shank (12), a plug foot (14) and a continuous insertion hole for expansion means (16), wherein at least in the area of the shank (12) first slots (26), which are offset in the circumferential direction, are arranged, which first slots (26) form expansion segments which are expandable when inserting an expansion element against an inside wall of a drill hole, wherein second slots (28) are provided in the plug coat, which second slots (28) are offset in the circumferential direction to each other and to the first slots (26) and axially against each other in relation to the second slots (28), wherein the first and second slots (26, 28) are arranged to overlap each other in the longitudinal direction, **characterised in that** the second longitudinal slots (28) pass through the plug foot (14) and divide the plug foot (14) into two expansion segments, **in that** the second slots are bridged by bridge elements (13) in the transition area between plug shank (12) and plug foot (14), which bridge elements (13) prevent an early expansion, **in that** the insertion hole for expansion means has a uniform cross section over the shank area and the plug foot (14), and **in that** at least the shank area is divided by annular grooves (32) into individual, axially successive, ring-shaped expansion sections (34) which distribute the expansion energy.

2. Expansion plug according to Claim 1, **characterised in that** the first and/or second slots (26, 28) are arranged in pairs which are offset to one another by 90°.

3. Expansion plug according to Claim 1 or 2, **characterised in that** all slots (26, 28) run axially parallel.

4. Expansion plug according to Claim 1 or 2, **characterised in that** the first and/or the second slots (26, 28) run at an angle to the longitudinal axis.

5. Expansion plug according to Claim 1 or 2, **characterised in that** the first and/or the second slots run spirally to the longitudinal axis.

6. Expansion plug according to any one of the preceding claims, **characterised in that** the plug coat has window slots (36) in which rotary wings (38) are arranged in a radially moveable manner, which rotary wings (38) are integrally formed on the plug coat by rotary joints (40) at their end on the plug foot side.

7. Expansion plug according to Claim 6, **characterised in that** the window slots (26) and the rotary wings (38) are arranged at the same angular distance to each other in the plug foot area.

8. Expansion plug according to any one of the preceding claims, **characterised in that** the insertion channel (16) has a widening (18) in the plug neck for forming an area free of expansion pressure.

9. Expansion plug according to any one of Claims 1 to 8, **characterised in that** the slot ends have roundings to avoid a stress concentration.

10. Expansion plug according to any one of Claims 1 to 9, **characterised in that** anti-rotation ribs (22) and at least one axial slot (24) are provided in the neck area.

11. Expansion plug according to Claim 10, **characterised in that** the axial slots in the neck part end in a continuous setting depth stop (20).

## Revendications

1. Cheville expansible, de préférence en matière plastique, comprenant un col (10), une tige (12), une semelle (14) et un canal ininterrompu (16) d'insertion d'un moyen de déploiement, des premières fentes (26) décalées dans le sens périphérique, pratiquées au moins dans la région de la tige (12), formant des segments déployables qui peuvent être écartés contre la paroi d'un trou foré lors de l'insertion d'un élément de déploiement, l'enveloppe de ladite cheville comportant des secondes fentes (28) qui sont périphériquement décalées les unes vis-à-vis des autres et vis-à-vis des premières fentes (26) et sont mutuellement décalées, dans le sens axial, par rapport auxdites premières fentes (26), sachant que les premières et secondes fentes (26, 28) sont disposées avec chevauchement réciproque dans la, direction longitudinale, lesdites secondes fentes longitudinales (28) s'étendant d'un trait sur l'intégralité de la semelle (14) de la cheville et scindant cette dernière en deux segments déployables, sachant que la largeur desdites secondes fentes est coiffée, dans la zone de transition entre la tige (12) de la cheville et la semelle (14) de ladite cheville, par des éléments d'entretoisement (30) qui empêchent un écartement prématuré, **caractérisée par le fait que** le canal d'insertion d'un moyen de déploiement offre une section transversale identique sur la région formant tige et sur la semelle (14) de la cheville ; et **par le fait qu'**au moins ladite région formant tige est subdivisée, par des rainures annulaires (32), en des tronçons expansibles individuels (34) de forme annulaire, qui sont placés en succession axiale et répartissent l'énergie de déploiement.

2. Cheville expansible selon la revendication 1, **caractérisée par le fait que** les premières et/ou les secondes fentes (26, 28) sont agencées par paires, avec décalage mutuel de 90°.

3. Cheville expansible selon la revendication 1 ou 2, **caractérisée par le fait que** toutes les fentes (26, 28) s'étendent avec parallélisme axial.

4. Cheville expansible selon la revendication 1 ou 2, **caractérisée par le fait que** les premières et/ou les secondes fentes (26, 28) s'étendent à l'oblique par rapport à l'axe longitudinal.

5. Cheville expansible selon les revendications 1 ou 2, **caractérisée par le fait que** les premières et/ou les secondes fentes présentent un tracé hélicoïdal vis-à-vis de l'axe longitudinal.

6. Cheville expansible selon l'une des revendications précédentes, **caractérisée par le fait que** l'enveloppe de ladite cheville comporte des fenêtres (36) dans lesquelles sont logées, avec mobilité radiale, des ailettes rotatives (38) faisant corps avec ladite enveloppe de la cheville, par l'intermédiaire d'articulations tournantes (40), à leur extrémité située côté semelle de ladite cheville.

7. Cheville expansible selon la revendication 6, **caractérisée par le fait que** les fenêtres (36), associées aux ailettes rotatives (38), sont disposées avec espacement angulaire identique dans la région de la semelle de ladite cheville.

8. Cheville expansible selon l'une des revendications précédentes, **caractérisée par le fait que** le canal d'insertion (16) présente un évasement (18), dans le col de ladite cheville, en vue de former une zone exempte de pression de déploiement.

9. Cheville expansible selon l'une des revendications 1 à 8, **caractérisée par le fait que** les extrémités des fentes comportent des arrondis, afin d'éviter un effet d'entaille.

10. Cheville expansible selon l'une des revendications 1 à 9, **caractérisée par le fait que** des nervures (22) d'arrêt rotatoire, et au moins une fente axiale (24), sont prévues dans la région du col.

11. Cheville expansible selon la revendication 10, **caractérisée par le fait que** les fentes axiales s'achèvent, dans la partie formant col, par une butée ininterrompue (20) arrêtant la profondeur d'implantation.
